# FASCICULE DE BREVET EUROPEEN

(11) **EP 3 973 581 B1**
(45) Date de publication et mention de la délivrance du brevet: **05.06.2024**
(21) Numéro de dépôt: 20726126.4
(22) Date de dépôt: 18.05.2020
(51) Int. Cl.: H01M 10/613, H01M 10/6556, H01M 10/6569, H01M 50/209, H01M 50/213

(54) **BATTERIE ÉQUIPÉE D'UN DISPOSITIF DE RÉGULATION DE TEMPÉRATURE À L'AIDE D'UN FLUIDE DIÉLECTRIQUE**
BATTERIE MIT EINER TEMPERATURREGULIERUNGSVORRICHTUNG UNTER VERWENDUNG EINER DIELEKTRISCHEN FLÜSSIGKEIT
BATTERY EQUIPPED WITH A TEMPERATURE REGULATION DEVICE USING A DIELECTRIC FLUID

(30) Priorité: 21.05.2019 FR 1905295
(43) Date de publication de la demande: 30.03.2022
(73) Titulaire: VALEO SYSTEMES THERMIQUES, 78320 Le Mesnil Saint-Denis (FR)
(72) Inventeur: AZZOUZ, Kamel, 78322 LE MESNIL SAINT DENIS CEDEX (FR); MAMMERI, Amrid, 78322 LE MESNIL SAINT DENIS CEDEX (FR); CHELALI, Imad, 78322 LE MESNIL SAINT DENIS CEDEX (FR); GARNIER, Sébastien, 78322 LE MESNIL SAINT DENIS CEDEX (FR)
(74) Mandataire: Valeo Systèmes Thermiques
(86) Numéro de dépôt international: PCT/EP2020/063756
(87) Numéro de publication internationale: WO 2020/234210

(56) Documents cités:
- EP-A1- 3 166 175
- CN-A- 106 848 478
- DE-A1-102017 212 210
- DE-A1-102017 212 211
- US-A1- 2011 151 302
- US-A1- 2019 097 288

## Description

L'invention concerne une batterie équipée d'un dispositif de régulation de température à l'aide d'un fluide diélectrique. Elle est en particulier destinée à équiper des véhicules automobiles, en particulier des véhicules automobiles à motorisation électrique ou hybride.

La part de marché des véhicules électriques étant de plus en plus importantes, les problématiques de refroidissement/chauffage des packs batterie qui les équipent deviennent des enjeux stratégiques. L'objectif est de concevoir un dispositif de gestion thermique des batteries le plus performant, efficient et économique possible. Souvent pour répondre au besoin de refroidissement/chauffage des batteries électriques, on utilise des « échangeurs de chaleur» consistant en une plaque froide avec circulation d'un liquide de refroidissement, les plaques étant au contact des cellules à refroidir. Ce genre de techniques conduit à un refroidissement non homogène des batteries et limite ainsi leur durée de vie et leur performance. Ces dispositifs présentent en outre une résistance thermique élevée en raison des épaisseurs de matière présentes entre le liquide de refroidissement et les cellules. Une solution proposée pour répondre à cette problématique consiste en une immersion des cellules formant les batteries électriques dans un fluide caloporteur diélectrique. Cette immersion peut être réalisée avec une circulation de fluide ou en condition statique avec changement de phase.

Ces deux techniques sont performantes d'un point de vue thermique en particulier en raison du contact direct établi entre le liquide et les cellules mais présentent le désavantage d'utiliser une grande quantité de liquide diélectrique, ce qui augmente le coût et le poids du pack batterie.

Pour pallier cet inconvénient, il est connu des circuits de fluide diélectrique permettant d'arroser les cellules avec du fluide diélectrique. Cependant, les circuits proposés jusqu'à présent présentent l'inconvénient d'augmenter l'encombrement des batteries, en particulier en hauteur, ainsi que de réduire le nombre de cellules pouvant être positionné dans la batterie, à volume donné. En effet, les cellules doivent être suffisamment écartées entre elle pour permettre le passage d'éléments du circuit. L'invention vise à résoudre ces problèmes en proposant une batterie comprenant au moins un rang de cellules de stockage d'énergie, ledit rang présentant une direction d'extension longitudinale, un côté supérieur et des côtés latéraux du rang étant respectivement définis par une succession de faces supérieures et latérales des cellules et d'espaces séparant lesdites cellules le long de ladite direction d'extension longitudinale, ladite batterie comprenant en outre un circuit de fluide diélectrique, ledit circuit comprenant un ou plusieurs orifices d'aspersion desdites cellules, ledit ou lesdits orifices d'aspersion affleurant le côté supérieur du rang et/ou étant situés en regard de l'un au moins des côtés latéraux dudit rang de sorte à ce que ledit circuit laisse libre le côté supérieur du rang et dans laquelle ledit circuit comprend au moins une rampe d'aspersion, munie desdits orifices d'aspersion, ladite rampe étant au moins partiellement à un niveau vertical juste supérieure à un niveau vertical de la face supérieure des cellules, la rampe, dite alors rampe supérieure, s'étend suivant un ou des bords latéraux et/ou un ou des bords longitudinaux dudit côté supérieur du ou des rangs de cellules, la rampe supérieure comprenant une ou des branches longitudinales s'étendant suivant l'un ou des bords longitudinaux du côté supérieur du ou des rangs de cellules, la ou lesdites branches longitudinales étant munies d'au moins certains desdits orifices d'aspersion, ladite rampe supérieure formant un anneau.

Grâce à la configuration en rang des cellules et à une telle disposition du circuit, qui se trouve déporté latéralement par rapport aux cellules d'un même rang, il est possible de réduire l'encombrement en hauteur des batteries. Les faces supérieures des cellules peuvent ainsi présenter des connecteurs de liaison électrique sans risquer d'interférer avec le circuit de fluide diélectrique. En outre, les cellules peuvent être rapprochées les unes des autres au sein d'un même rang car plus aucun élément du circuit n'est disposé entre les cellules, ceci tout en conservant un refroidissement efficace des batteries.

L'invention peut également comprendre l'une quelconque des caractéristiques suivantes, prises individuellement ou selon toute combinaison techniquement possible formant autant de modes de réalisation de l'invention:
- la batterie comprend un corps fermé étanche, ledit corps comprenant lesdites cellules et au moins une partie, dite d'aspersion, dudit circuit, ladite partie d'aspersion comprenant lesdits orifices d'aspersion,
- le nombre de rangs de cellules est supérieur à deux, les rangs étant disposés de sorte que leurs côtés latéraux soient en vis-à-vis en formant des rangées de cellules selon une direction d'extension transversale, orthogonale à ladite direction d'extension longitudinale,
- les rangs présentent un nombre supérieur de cellules que les rangées,
- l'espace entre les cellules d'un même rang est compris entre 1 et 10 mm
- ledit circuit comprend des buses d'aspersion définissant lesdits orifices d'aspersion,
- lesdites cellules comprennent un corps, les connectiques de liaison électriques étant situées au niveau d'une face supérieure du corps,
- ladite batterie comprend une plaque de condensation, située en regard de ladite face supérieure des cellules,
- une distance séparant ladite plaque de condensation des cellules est comprise entre 5 et 10 mm,
- la rampe supérieure comprend une ou des branches transversales s'étendant suivant l'un ou des bords transversaux dudit côté supérieur du ou des rangs de cellules, la ou lesdites branches transversales étant munies d'au moins certains desdits orifices d'aspersion,
- la rampe supérieure comprend une branche de liaison reliant lesdites branches transversales, dites branches d'aspersion
- ladite branche de liaison présente un diamètre restreint,
- la rampe, dite alors rampe latérale, est située en vis-à-vis de l'un, dit premier, des côtés latéraux du ou des rangs de cellules,
- la rampe latérale comprend une ou des branches longitudinales s'étendant en vis-à-vis dudit premier côté, la ou lesdites branches longitudinales étant munies d'au moins certains desdits orifices d'aspersion,
- la rampe latérale comprend une branche de liaison reliant lesdites branches longitudinales, dites branches d'aspersion,
- la rampe latérale comprend deux plaques reliées pour former mutuellement lesdites branches d'aspersion et de liaison,
- l'une desdites plaques est munie desdits orifices d'aspersion,
- l'une des ou lesdites plaques comprennent une jupe de fixation s'étendant autour d'un des bords longitudinaux du ou des rangs de cellules,
- ledit circuit comprend au moins une plaque d'aspersion, munie du ou desdits orifices d'aspersion,
- ladite plaque est située en vis-à-vis de l'un desdits côtés latéraux du ou des rangs de cellules,
- lesdits orifices d'aspersion sont régulièrement situés en surface de ladite plaque.

L'invention sera mieux comprise et d'autres détails, caractéristiques et avantages de l'invention apparaîtront à la lecture de la description suivante faite à titre d'exemple non limitatif et en référence aux dessins annexés dans lesquels :
[Fig. 1] la figure 1 illustre en perspective une batterie selon l'invention,
[Fig. 2] la figure 2 illustre en perspective la batterie de la figure 1 équipée d'un premier mode de réalisation d'un circuit de fluide diélectrique, un couvercle de ladite batterie ayant été retiré,
[Fig. 3] la figure 3 illustre de façon schématique en vue de dessus une batterie selon l'invention équipé d'un deuxième mode de réalisation d'un circuit de fluide diélectrique, un couvercle de ladite batterie ayant été retiré,
[Fig. 4] la figure 4 illustre en perspective une batterie selon l'invention équipée d'un troisième mode de réalisation d'un circuit de fluide diélectrique, seul l'intérieur de la batterie ayant été illustré,
[Fig. 5] la figure 5 illustre en perspective une batterie selon l'invention équipée d'un quatrième mode de réalisation d'un circuit de fluide diélectrique, seul un couvercle et l'intérieur de la batterie ayant été illustrés,
[Fig. 6] la figure 6 illustre de façon schématique en perspective une plaque du circuit de fluide diélectrique illustré à la figure 5,
[Fig. 7] la figure 7 illustre en perspective une batterie selon l'invention équipée d'un cinquième mode de réalisation d'un circuit de fluide diélectrique, seul l'intérieur de la batterie ayant été illustré,
[Fig. 8] la figure 8 reprend la figure 7 selon un autre angle de vue.

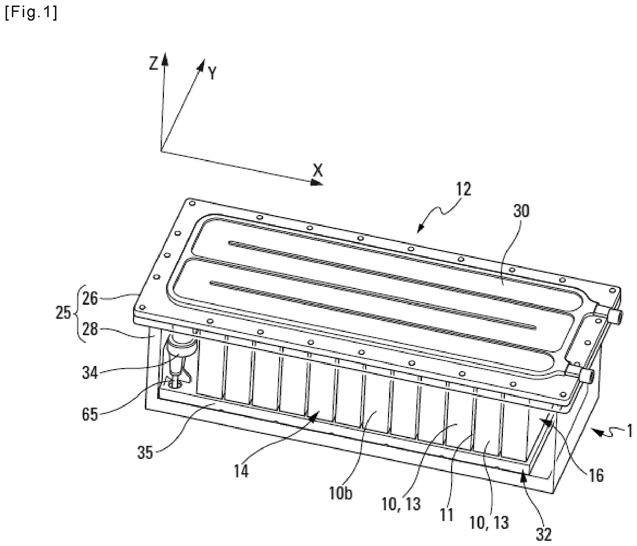

Comme illustré aux figures 1 à 5, 7 et 8, l'invention concerne une batterie. Il s'agit en particulier d'une batterie destinée à équipe un véhicule automobile, notamment un véhicule électrique ou hybride.

Ladite batterie comprenant au moins un rang 1, 2 de cellules 10 de stockage d'énergie. Le ou chacun desdits rangs présentent une direction d'extension longitudinale X, une direction d'extension transversale Y et une direction d'extension en hauteur Z. Le ou chacun desdits rangs présentent également un côté supérieur 12 et des côtés latéraux 14. Ces côtés 12, 14 sont respectivement définis par une succession de faces supérieures 10a et latérales 10b des cellules et d'espaces 11 séparant lesdites cellules 10 le long de ladite direction d'extension longitudinale X.

Le ou chacun desdits rangs comprend en outre un côté inférieur, opposé au côté supérieur et non visible sur les figures, ainsi que des côtés transversaux 16, reliant chacun des côtés latéraux 14. Lesdits côté transversaux 16 sont définis par celles des cellules 10 situées en extrémité du rang.

Les notions de « supérieur », « inférieur », « latéral » ou « transversal » sont à apprécier par rapport à une orientation de la batterie en utilisation.

Les cellules sont notamment de forme parallélépipédique et de même taille. Dans un même rang, elles sont disposées l'une derrière l'autre de sorte que leurs faces supérieure, inférieure et latérales se trouvent respectivement dans un même plan. A titre d'exemple non limitatif, elles présentent des dimensions de 150 mm (selon Y) par 100 mm (selon Z) par 27 mm (selon X). Chacune des cellules 10 est séparée de la voisine par l'un des espaces 11. Chaque espace 11 définit avantageusement la même distance entre deux cellules 10 voisines.

En variante, non illustrée, les cellules 10 sont de forme cylindrique, en particulier de section circulaire, un axe longitudinal des cellules 10 étant orienté selon ladite direction d'extension en hauteur Z. Dans un même rang, les cellules 10 sont réparties en groupe, les cellules d'un même groupe étant situées à un même niveau selon l'axe X. Lesdites cellules 10 sont alors avantageusement disposées de façon droite ou en quinconce d'un groupe à l'autre le long du rang. Dans un tel cas de figures, les côtés latéraux 14 du ou des rangs sont définis par une partie, tournée vers l'extérieure, des côtés latéraux de celles des cellules 10 se trouvant aux extrémités de chacun des groupes, c'est-à-dire se trouvant de part et d'autre d'un même groupe selon la direction d'extension transversale Y. Dans un même rang, les cellules sont disposées de sorte que leurs faces supérieure et inférieure se trouvent respectivement dans un même plan. A titre d'exemple non limitatif, elles présentent des dimensions de 70 mm (selon Z) et un diamètre de 20 mm. Chacun des groupes de cellules 10 est séparé du voisin par l'un des espaces 11. Chaque espace 11 définit avantageusement la même distance minimum entre chacune des cellules de deux groupe voisins.

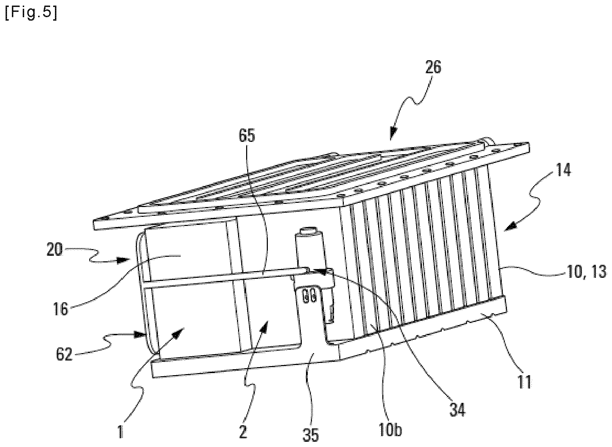

Aux figures 1 à 4, 7 et 8, un seul dit rang est prévu. A la figure 5, le nombre de rangs est de deux, les deux rangs 1, 2 étant disposés l'un à côté de l'autre, chaque rang s'étendant selon la direction d'extension longitudinale X. Ceci n'est pas limitatif et la batterie conforme à l'invention pourra comprendre un nombre supérieur de rangs, disposés les uns à côté des autres selon la direction d'extension transversale Y, ou plusieurs étages de rangs, chaque rang s'étendant selon la direction d'extension longitudinale X.

Si le nombre de rangs de cellules est supérieur à deux, les rangs étant disposés de sorte que leurs côtés latéraux soient en vis-à-vis en formant des rangées de cellules selon la direction d'extension transversale Y, les rangs présentent un nombre supérieur de cellules 10 que les rangées.

Lesdits cellules 10 comprennent, par exemple, un corps 13 et des connectiques de liaison électriques, non illustrées. Il s'agit en particulier de connectiques des cellules 10 entre elles. Lesdites connectiques sont préférentiellement situées au niveau d'une face supérieure 15 du corps 13.

Pour le bon fonctionnement de la batterie, il est souhaité que la température des cellules 10 soit maintenue dans un intervalle de valeur restreint, notamment entre 20 et 40°C.

Ladite batterie comprend pour cela un circuit 20 de fluide diélectrique, ledit circuit comprenant un ou plusieurs orifices 22 d'aspersion desdites cellules 10. Ledit circuit 20 permet de la sorte de réguler la température des cellules 10, ceci tout en limitant la quantité de fluide diélectrique utilisé. En effet, la quantité de fluide employé est bien moindre que dans un dispositif dans lequel les cellules sont immergées dans un fluide diélectrique.

Avantageusement, les orifices d'aspersion 22 sont configurées de sorte à pulvériser le liquide diélectrique sous forme de fines gouttes, notamment de façon poly directionnelle. La taille des gouttes peut être variable. Elle est, par exemple, d'environ 20 µm. Les orifices d'aspersion 22 peuvent en particulier être configurées de sorte à réaliser une brumisation du fluide.

Ledit circuit 10 comprend, par exemple, des buses d'aspersion 24 du fluide diélectrique, en phase liquide, définissant lesdits orifices d'aspersion 22. Lesdites buses d'aspersion 24 permettent d'asperger du fluide 3 en direction de la ou des cellules 10. Lesdites buses 24 comprennent un canal de passage du fluide présentant un diamètre compris, notamment, entre 50 et 500 µm.

La batterie est préférentiellement configurée pour que le fluide diélectrique arrive sous forme de gouttes à la surface des cellules 10 et subissent un changement de phase en se vaporisant, au moins partiellement, sous l'effet de la chaleur absorbée. Pour cela, comme plus particulièrement illustré à la figure 1, la batterie comprend un boîtier 25, fermé et étanche. Ledit boîtier 25 comprend lesdites cellules 10 et au moins une partie, comprenant lesdits orifices d'aspersion 22, dudit circuit 20. Ici, le boîtier 25 renferme la totalité du circuit 20. Ledit boîtier 25 est en particulier configuré pour maintenir des conditions de pression de sorte que le fluide diélectrique choisi subisse un changement de phase en surface des cellules à une température comprise entre 20 et 40°C, notamment environ 34°C.

La batterie est ici en outre configurée pour que la portion du fluide diélectrique sous phase vapeur après vaporisation subisse une condensation pour repasser en phase liquide et, préférentiellement, puisse à nouveau être utilisé pour une aspersion des cellules 10 selon un fonctionnement en boucle fermée.

Pour cela la batterie comprend, par exemple, un condenseur. Ledit condenseur comprend ici une plaque de condensation 26, ladite plaque de condensation 26 étant située en regard de la face supérieure 12 du ou desdits rangs 1, 2 de cellules 10. Ladite plaque de condensation 26 forme avantageusement un couvercle fermant un corps 28 du boîtier 25.

Avantageusement, ladite plaque de condensation 26 est configurée pour la circulation d'un fluide réfrigérant destiné à échanger de la chaleur avec le fluide diélectrique. Le réfrigérant circule dans la plaque de condensation 26 de manière à abaisser la température de ladite plaque ce qui permet de condenser le fluide diélectrique gazeux au niveau d'une face inférieure de ladite plaque de condensation 26. Ce dernier peut ainsi s'écouler, notamment en ruisselant par gravité et/ou capillarité vers une partie basse du boîtier 25.

Ladite plaque de condensation 26 comprend, par exemple, deux tôles empilées selon la direction d'extension en hauteur Z. Lesdites tôles forment entre elles un ou des canaux 30 de circulation du fluide réfrigérant, par exemple définis par emboutissage de l'une ou desdites tôles.

La batterie comprend en outre ici un réservoir 32 disposé dans le boîtier 25 sous les cellules 10. Ledit réservoir 32 est apte à récupérer le liquide diélectrique en provenance de la face inférieure de la plaque de condensation 26.

La batterie comprend encore une pompe 34 configurée pour aspirer ledit fluide diélectrique dans le réservoir 32 et le mettre sous pression dans ledit circuit 20 de fluide diélectrique.

Avantageusement, ladite pompe 34 est configurée pour mettre le fluide sous une pression supérieure à 10 bars. Ainsi, les pertes de pression au sein du circuit 20 sont négligeables et chaque orifice d'aspersion 22 est soumis à une même pression. Ladite pompe 34 est située, par exemple dans le prolongement longitudinal du ou de l'un des rangs 1, 2.

Le fluide en phase liquide dans le réservoir 16 est alors aspiré par la pompe 34. Le condenseur 26 permet de condenser le fluide diélectrique 3 grâce à une différence de température entre le condenseur et le fluide diélectrique en phase vapeur.

Ainsi, le fluide diélectrique se trouve successivement en phase liquide et sous pression dans le circuit 20 puis, après aspersion à travers les orifices 22, il passe à la pression du boîtier 25, ceci d'abord sous forme de gouttelettes puis sous phase gazeuse après vaporisation au contact de la surface des cellules 10. Il se condense ensuite pour passer à nouveau en phase liquide au contact de la plaque de condensation 26 puis ruisselle jusqu'au réservoir 32 où il est aspiré par la pompe 34 pour un nouveau passage dans le circuit 20.

Plus généralement, lesdits orifices 22 sont configurés pour arroser la surface des cellules 10, avec ou sans changement de phase du fluide diélectrique, le fluide circulant en boucle fermée ou non.

Dans le cas d'un arrosage des cellules sans changement de phase du fluide, la batterie pourra être configurée pour un fonctionnement en boucle fermée, le fluide restant en phase liquide tout le long de la boucle en ruisselant le long de la surface des cellules pour arriver dans le réservoir 32. Des moyens de refroidissement du fluide diélectrique sont alors avantageusement prévus.

Ladite batterie comprend en outre ici un socle 35 supportant lesdites cellules 10. Ledit socle 35 est, par exemple, posé sur un fond du corps 28 du boîtier 25. Il baigne ici dans le réservoir 32.

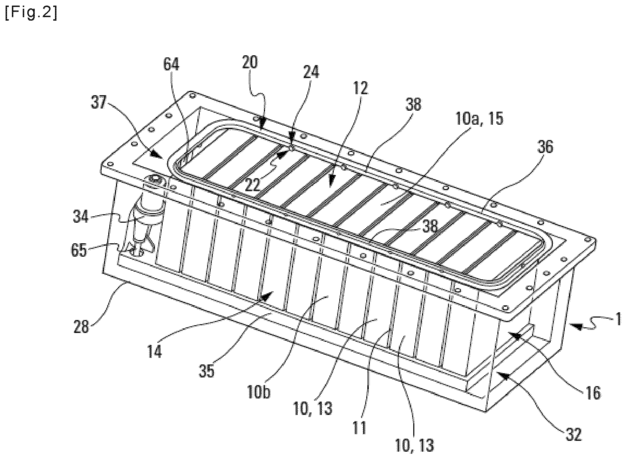

Comme plus particulièrement illustré aux figures 2 à 5, 7 et 8, selon l'invention, ledit ou lesdits orifices d'aspersion 22 affleurent le côté supérieur 12 du rang 1 de cellules 10 et/ou sont situés en regard d'au moins l'un des côtés latéraux 14 dudit rang de sorte à ce qui ledit circuit 20 laisse libre le côté supérieur 12 du rang.

De la sorte, le circuit 20 de fluide diélectrique ne se trouve plus à l'aplomb du rang, ou alors uniquement à la marge, c'est-à-dire, en périphérie. Le circuit 20 ne risque donc plus d'interférer avec les éventuels connecteurs de liaison électrique situés au niveau des faces supérieures 10a des cellules 10. L'encombrement en hauteur de la batterie peut également être diminué, ceci en rapprochant son couvercle desdites faces supérieures 10a. A titre d'exemple, une distance séparant ladite plaque de condensation 26 des cellules 10, c'est-à-dire, la dimension, selon la direction d'extension en hauteur Z, entre la face inférieure de ladite plaque de condensation 26 et un sommet des connectiques de liaison des cellules 10 est comprise entre 5 et 10 mm et/ou juste supérieure à l'encombrement desdits connecteurs de liaison électrique.

Pour autant, le refroidissement des cellules reste efficace. En effet, en fonctionnant par aspersion, et plus particulièrement par brumisation, le fluide atteint une surface suffisante des cellules 10 même si le circuit 20 est positionné de façon légèrement décalé, dans en plan s'étendant selon les directions d'extension longitudinale X et transversale Y, par rapport auxdites cellules 10.

Pour favoriser un tel résultat, il est préférentiel que l'espace entre les cellules 10 d'un même rang, à savoir la distance selon la direction longitudinale X entre deux cellules 10 voisines, soit compris entre 1 et 10 mm. Une distance juste au-dessus de 1 mm favorisera la compacité de la batterie. Une distance ayant une valeur plus faible présente un risque vis-à-vis de la bonne propagation du fluide diélectrique à la surface des cellules 10.

En cas de pluralité de rangs, la batterie pourra comprendre autant de circuits 20 que de rangs. Les circuits 20 sont alors disposés entre les rangs voisins, selon ladite direction d'extension transversale Y. En variante, comme illustré à la figure 5, un seul et même circuit 20 pourra être utilisé pour plusieurs rangs voisins, selon ladite directions d'extension transversale Y. Il pourra en être de même à chaque éventuel étage de rangs.

Selon les différents modes de réalisation illustrés aux figures 2 à 4, 7 et 8, ledit circuit 20 comprend au moins une rampe 36, 50 d'aspersion, munie desdits orifices d'aspersion 22. Selon l'invention, comme on l'aura compris, la rampe 36, 50 se trouve, en projection orthogonale, au moins partiellement voire en totalité en dehors d'une zone de projection du côté supérieur 12 du rang 1 de cellules 10. Autrement dit, la rampe 36 est disposée au moins partiellement voire en totalité à l'extérieur, en périphérie et/ou autour du rang 1. Si la rampe 36, 50 se trouve en partie à l'aplomb du côté supérieur 12 du rang 1, c'est uniquement le long des bords dudit côté supérieur 12.

Pour mieux épouser la forme du rang et favoriser une aspersion sur la plus grande surface possible du rang, la rampe 36 comprend au moins un coude 37, par exemple situé autour d'un sommet de l'une de celles des cellules 10 d'extrémité du rang. Ladite rampe d'aspersion 36, 50 est avantageusement située de sorte à ce qu'un cône de brumisation issu d'au moins certaines desdites buses 24, voire de l'ensemble desdites buses 24, englobe en tout ou partie le côté supérieur 12 du rang. Pour cela, ici, la rampe 36, 50 est au moins partiellement à un niveau vertical supérieur à un niveau vertical de la face supérieure 10a des cellules 10 de sorte qu'une partie au moins desdites buses 24 soit au-dessus ou juste en dessous du niveau verticale de la face supérieure 10a des cellules.

Comme illustré aux figures 2 à 4, la rampe 36, dite alors rampe supérieure, s'étend suivant un ou des bords transversaux et/ou un ou des bords longitudinaux dudit côté supérieur 12 du rang de cellules 10.

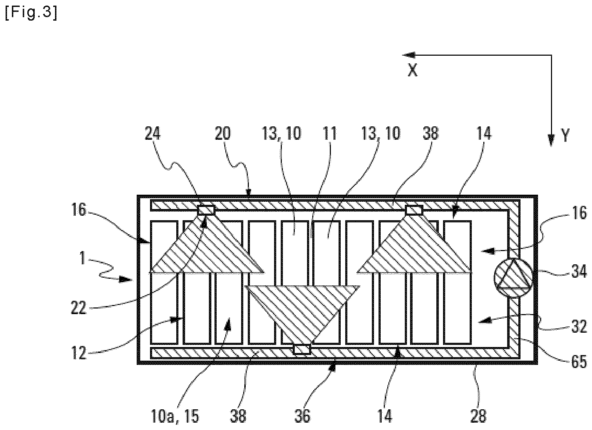

Aux figures 2 et 3, la rampe supérieure 36 comprend une ou des branches longitudinales 38 s'étendant suivant l'un ou des bords longitudinaux du côté supérieur 12 du ou des rangs de cellules 10, la ou lesdites branches longitudinales 38 étant munies d'au moins certains desdits orifices d'aspersion 22.

A la figure 2, lesdits orifices d'aspersion 22 sont situés, par exemple, en vis-à-vis d'une desdites branches longitudinales 38 à l'autre. A la figure 3, ils sont situés en quinconce. Selon une variante, tout ou certains desdits orifices d'aspersion 22 sont disposé en vis-à-vis de certains au moins des espaces 11 entre les cellules 10.

A la figure 2, lesdites branches longitudinales 38 chevauchent transversalement l'un des ou les bords longitudinaux dudit côté supérieur 12 du rang. Plus précisément, dans leur largeur, c'est-à-dire selon la direction d'extension transversale Y, une partie des branches longitudinales 38 est située à l'aplomb du côté supérieur 12 du rang de cellules 10. Lesdits branches longitudinales sont donc situées partiellement à l'aplomb du côté supérieur 12 mais uniquement le long de ses bords longitudinaux et non en partie centrale dudit côté supérieure 12. A la figure 3, lesdites branches longitudinales 38 sont situées totalement en retrait des cellules 10, selon ladite direction d'extension transversale Y.

A la figure 2, lesdites branches longitudinales 38 se prolongent l'une vers l'autre le long des bords transversaux du côté supérieur 12 du rang 1 pour former un anneau. Les parties de l'anneau longeant les bords transversaux sont en retrait des cellules, selon la direction d'extension longitudinale X. Elles sont également munies d'orifices d'aspersion 22. A la figure 3, lesdites branches longitudinales 38 présentent une extrémité distale libre.

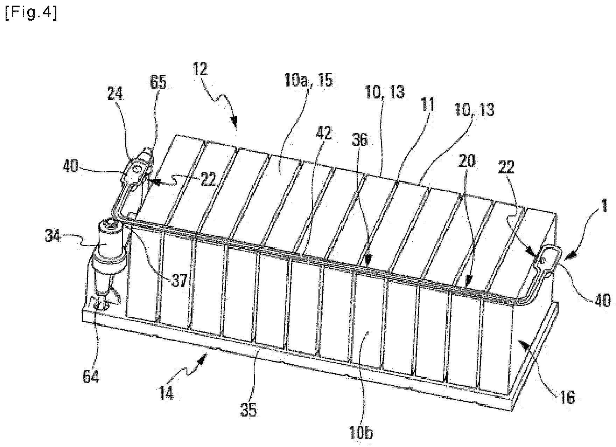

A la figure 4, la rampe supérieure 36 comprend une ou des branches transversales 40 s'étendant suivant l'un des ou les bords transversaux dudit côté supérieur 12 du ou des rangs de cellules, la ou lesdites branches transversales 40 étant munies d'au moins certains desdits orifices d'aspersion 22, ici de l'ensemble des orifices d'aspersion 22.

La rampe supérieure 36 comprend une branche de liaison 42 reliant lesdites branches transversales 40, dites branches d'aspersion. Ladite branche de liaison 42 alimente lesdites branches d'aspersion 40 en fluide diélectrique. Autrement dit, ladite branche de liaison 42 ne comprend pas d'orifice d'aspersion. Ladite branche de liaison 42 présente éventuellement un diamètre restreint par rapport à celui des branches latérales 40. Dans l'exemple illustré, un orifice d'aspersion 22 unique est prévu par branche transversale 40.

Ladite branche de liaison 42 chevauche transversalement l'un des bords longitudinaux dudit côté supérieur 12 du rang. Plus précisément, dans sa largeur, c'est-à-dire selon la direction d'extension transversale Y, une partie de la branche de liaison 42 est située à l'aplomb du côté supérieur 12 du rang de cellules 10. Ladite branche longitudinale est donc située partiellement à l'aplomb du côté supérieur 12 mais uniquement le long de l'un de ses bords longitudinaux et non en partie centrale dudit côté supérieure 12. Lesdites branches d'aspersion 40 sont situées en retrait des cellules 10, selon ladite direction longitudinale X. Ici, ladite branche de liaison 42 se prolonge de façon coudée le long des bords transversaux du rang de cellules 10 vers chacune des branches d'aspersion 40, ces dernières définissant une chambre de volume élargie.

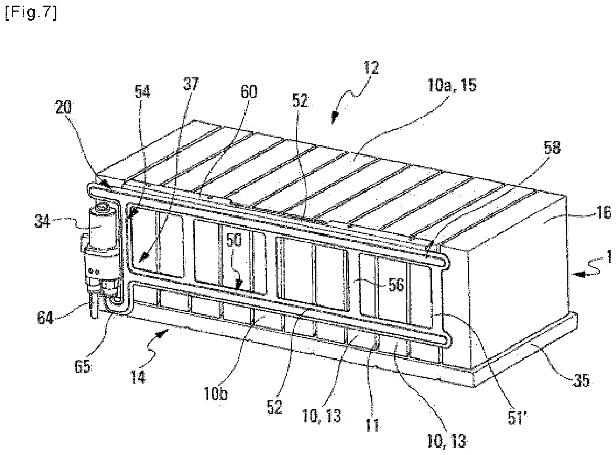

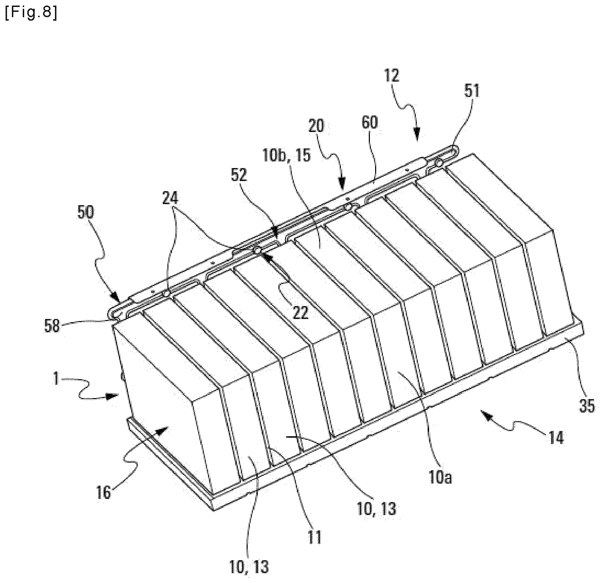

Comme illustré aux figures 7 et 8, la rampe 50, dite alors rampe latérale, est située en vis-à-vis de l'un, dit premier, des côtés latéraux 14 du rang de cellules 10.

La rampe latérale 50 comprend, par exemple, une ou des branches longitudinales 52 s'étendant en vis-à-vis dudit premier côté, la ou lesdites branches longitudinales 52 étant munies d'au moins certains desdits orifices d'aspersion 22, ici de l'ensemble des orifices d'aspersion 22.

La rampe latérale 50 comprend en outre une branche de liaison 54 reliant lesdites branches longitudinales 52, dites branches d'aspersion, ici au nombre de deux. Ladite branche de liaison 54 alimente lesdites branches d'aspersion 52 en fluide diélectrique. Ici, lesdites branches d'aspersion 52 sont orientées selon ladite direction d'extension longitudinale X et sont donc parallèles entre elles. Ladite branche de liaison 54 est orientée perpendiculairement auxdites branches d'aspersion 52.

Une première desdites branches d'aspersion 52 est située au voisinage d'un bord longitudinal supérieur dudit premier côté latéral. Une autre desdites branches d'aspersion 52 est située au voisinage d'un bord longitudinal inférieur dudit premier côté latéral.

La rampe latérale 50 comprend en outre avantageusement des entretoises 56 reliant lesdits branches d'aspersion. Lesdites entretoises sont ici orientées selon ladite direction d'extension en hauteur Z et sont ainsi parallèle à la branche de liaison 54. Aucune circulation de fluide n'a lieu dans lesdites entretoises 56.

Les orifices d'aspersion 22 sont avantageusement disposés régulièrement le long desdites branches d'aspersion 52. Ils sont ici disposés en vis-à-vis de certains des espaces 11 entre les cellules 10. Ladite branche de liaison 54 ne comprend pas d'orifice d'aspersion.

La rampe latérale 50 comprend, par exemple, deux plaques 51, 51' reliées face contre face pour former mutuellement lesdites branches d'aspersion 52 et de liaison 54 ainsi que les entretoises 56. Chacune desdites plaques 51, 51' présentent des canaux 58, notamment formés par emboutissage, situés en vis-à-vis et définissant un conduit de circulation du fluide diélectrique dans lesdites branches d'aspersion 52 et de liaison 54.

L'une 51 desdits plaques est située en vis-à-vis dudit premier côté latéral. Lesdites buses d'aspersion 24 sont fixées à cette dernière dans des passages prévus à cette fin dans son épaisseur.

Ici, lesdites plaques 51, 51' comprennent deux jupes de fixation 60 s'étendant autour d'un des bords longitudinaux du rang de cellules 10. Lesdites jupes 60 s'étendent, par exemple, à partir de ladite branche d'aspersion 52 située au voisinage d'un bord longitudinal supérieur dudit premier côté latéral. Lesdites jupes 60 coiffent certaines desdites buses 24. En variante, la ou lesdites jupes pourront n'être formées que par l'une desdites plaques, par exemple celle 51' ne portant pas les buses d'aspersion 24.

De façon cumulative ou indépendamment de ce qui précède, la pompe 34 est située en vis-à-vis du premier côté latéral 14, ici à proximité de la branche de liaison 54.

Comme illustré à la figure 5, ledit circuit 20 comprend au moins une plaque d'aspersion 62, munie du ou desdits orifices d'aspersion 22. Comme la rampe latérale 50, ladite plaque 62 est située en vis-à-vis de l'un desdits côtés latéraux du ou des rangs de cellules 10. Ladite plaque d'aspersion 62 définit intérieurement une chambre de circulation du fluide diélectrique permettant d'alimenter lesdits orifices d'aspersion 22.

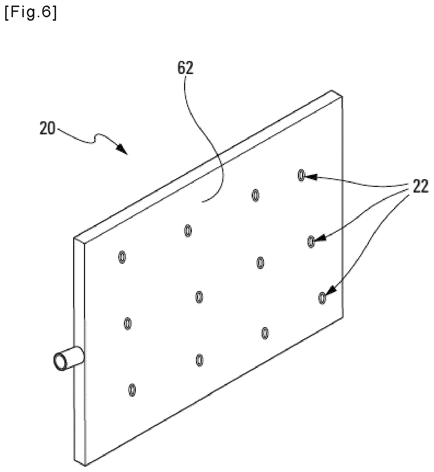

Comme cela est plus visible figure 6, lesdits orifices d'aspersion 22 sont de façon préférentielle régulièrement situés en surface de ladite plaque 62.

De façon plus générale, les orifices d'aspersion 22 sont disposés régulièrement le long desdites direction d'extension longitudinale X et/ou transversale Y, que ce soit au niveau desdites branches d'aspersion 38, 40, 52, de ladite plaque 62 ou de tout autre élément du circuit d'alimentation 10.

Dans les différents modes de réalisation de l'invention illustrés plus haut, le circuit 20 comprend en outre un ou des premières tubulures 64 reliant, d'une part, ladite pompe 34 et, d'autre part, lesdites rampes 36, 50 et/ou ladite plaque d'aspersion 62. Le circuit 20 pourra encore comprendre une seconde tubulure 65 reliant ledit réservoir 32 et ladite pompe 34, par exemple en passant à travers le socle 35.

Dans le mode de réalisation des figures 7 et 8, ladite première tubulure 64 est définie par une partie des canaux 58 formés par lesdites plaques 51, 51'. Avantageusement, outre les cellules 10, ledit socle 35 porte le circuit 20, ladite pompe 32 et/ou lesdites tubulures 64, 65 de sorte à former un ensemble prêt à monter dans ledit boîtier 25.

## Revendications

1. Batterie comprenant au moins un rang de cellules (10) de stockage d'énergie, ledit rang présentant une direction d'extension longitudinale, un côté supérieur (12) et des côtés latéraux (14) du rang étant respectivement définis par une succession de faces supérieures (10a) et latérales (10b) des cellules (10) et d'espaces (11) séparant lesdites cellules (10) le long de ladite direction d'extension longitudinale, ladite batterie comprenant en outre un circuit (20) de fluide diélectrique, ledit circuit (20) comprenant un ou plusieurs orifices d'aspersion (22) desdites cellules (10), ledit ou lesdits orifices d'aspersion (22) affleurant le côté supérieur (12) du rang et/ou étant situés en regard de l'un au moins des côtés latéraux (14) dudit rang de sorte à ce que ledit circuit (20) laisse libre le côté supérieur (12) du rang
et dans laquelle ledit circuit (20) comprend au moins une rampe d'aspersion (36, 50), munie desdits orifices d'aspersion (22), ladite rampe (36, 50) étant au moins partiellement à un niveau vertical juste supérieure à un niveau vertical de la face supérieure (10a) des cellules (10), la rampe (36), dite alors rampe supérieure, s'étend suivant un ou des bords latéraux et/ou un ou des bords longitudinaux dudit côté supérieur (12) du ou des rangs de cellules (10), la rampe supérieure (36) comprenant une ou des branches longitudinales (38) s'étendant suivant l'un ou des bords longitudinaux du côté supérieur (12) du ou des rangs de cellules (10), la ou lesdites branches longitudinales (38) étant munies d'au moins certains desdits orifices d'aspersion (22), ladite rampe supérieure (36) formant un anneau.

2. Batterie selon la revendication 1 dans laquelle l'espace (11) entre les cellules (10) d'un même rang est compris entre 1 et 10 mm.

3. Batterie selon l'une quelconque des revendications précédentes comprenant une plaque de condensation (26), située en regard de la face supérieure (10a) des cellules (10), une distance séparant ladite plaque de condensation (26) des cellules (10) étant comprise entre 5 et 10 mm.

4. Batterie selon la revendication 1 dans laquelle la rampe supérieure (36) comprend une ou des branches transversales (40) s'étendant suivant l'un ou des bords transversaux dudit côté supérieur (12) du ou des rangs de cellules (10), la ou lesdites branches latérales (40) étant munies d'au moins certains desdits orifices d'aspersion (22), la rampe supérieure (36) comprenant une branche de liaison (42) reliant lesdites branches transversales (42), dites branches d'aspersion.

5. Batterie selon l'une quelconque des revendications 1 à 3 dans laquelle ledit circuit (20) comprend au moins une plaque d'aspersion (62), munie du ou desdits orifices d'aspersion (22), ladite plaque étant située en vis-à-vis de l'un desdits côtés latéraux (14) du ou des rangs de cellules (10).

## Patentansprüche

1. Batterie, die mindestens eine Reihe von Zellen (10) zur Energiespeicherung beinhaltet, wobei die Reihe eine Längserstreckungsrichtung aufweist, wobei eine obere Seite (12) und seitliche Seiten (14) der Reihe jeweils durch eine Folge von oberen (10a) und seitlichen (10b) Flächen der Zellen (10) und von Zwischenräumen (11), die die Zellen (10) entlang der Längserstreckungsrichtung trennen, definiert werden, wobei die Batterie ferner einen Kreislauf (20) mit einer dielektrischen Flüssigkeit beinhaltet, wobei der Kreislauf (20) eine oder mehrere Öffnungen zum Besprühen (22) der Zellen (10) beinhaltet, wobei die eine oder die mehreren Sprühöffnungen (22) mit der oberen Seite (12) der Reihe bündig sind und/oder sich gegenüber mindestens einer der seitlichen Seiten (14) der Reihe befinden, sodass der Kreislauf (20) die obere Seite (12) der Reihe freilässt,
und wobei der Kreislauf (20) mindestens eine Sprührampe (36, 50) beinhaltet, die über die Sprühöffnungen (22) verfügt, wobei sich die Rampe (36, 50) mindestens teilweise auf einer vertikalen Ebene knapp über einer vertikalen Ebene der oberen Fläche (10a) der Zellen (10) befindet, wobei sich die Rampe (36), in diesem Fall als obere Rampe bezeichnet, gemäß einem oder mehreren seitlichen Rändern und/oder einem oder mehreren Längsrändern der oberen Seite (12) der einen oder der mehreren Reihen von Zellen (10) erstreckt, wobei die obere Rampe (36) einen oder mehrere Längszweige (38) beinhaltet, die sich gemäß einem oder mehreren Längsrändern der oberen Seite (12) der einen oder der mehreren Reihen von Zellen (10) erstrecken, wobei der eine oder die mehreren Längszweige (38) über mindestens einige der Sprühöffnungen (22) verfügen, wobei die obere Rampe (36) einen Ring bildet.

2. Batterie nach Anspruch 1, wobei der Zwischenraum (11) zwischen den Zellen (10) einer gleichen Reihe zwischen 1 und 10 mm beträgt.

3. Batterie nach einem beliebigen der vorhergehenden Ansprüche, die eine Kondensationsplatte (26) beinhaltet, die sich gegenüber der oberen Fläche (10a) der Zellen (10) befindet, wobei ein Abstand, der die Kondensationsplatte (26) von den Zellen (10) trennt, zwischen 5 und 10 mm beträgt.

4. Batterie nach Anspruch 1, wobei die obere Rampe (36) einen oder mehrere Querzweige (40) beinhaltet, die sich gemäß einem oder mehreren Querrändern der oberen Seite (12) der einen oder der mehreren Reihen von Zellen (10) erstrecken, wobei der eine oder die mehreren Querzweige (40) über mindestens einige der Sprühöffnungen (22) verfügen, wobei die obere Rampe (36) einen Verbindungszweig (42) beinhaltet, der die Querzweige (42), als Sprühzweige bezeichnet, verbindet.

5. Batterie nach einem beliebigen der Ansprüche 1 bis 3, wobei der Kreislauf (20) mindestens eine Sprühplatte (62) beinhaltet, die über die eine oder die mehreren Sprühöffnungen (22) verfügt, wobei sich die Platte gegenüber einer der seitlichen Seiten (14) der einen oder der mehreren Reihen von Zellen (10) befindet.

## Claims

1. Battery comprising at least one row of energy storage cells (10), said row having a longitudinal extension direction, with an upper side (12) and lateral sides (14) of the row being respectively defined by a series of upper (10a) and lateral (10b) faces of the cells (10) and of spaces (11) separating said cells (10) in said longitudinal extension direction, said battery further comprising a dielectric fluid circuit (20), said circuit (20) comprising one or more spray orifices (22) for spraying said cells (10), said one or more spray orifices (22) being flush with the upper side (12) of the row and/or being located facing at least one of the lateral sides (14) of said row so that said circuit (20) leaves the upper side (12) of the row free,
and wherein said circuit (20) comprises at least one spray ramp (36, 50), provided with said spray orifices (22), said ramp (36, 50) being at least partially on a vertical level immediately above a vertical level of the upper face (10a) of the cells (10), the ramp (36), then called upper ramp, extends along one or more lateral edges and/or one or more longitudinal edges of said upper side (12) of the row or rows of cells (10), the upper ramp (36) comprising one or more longitudinal branches (38) extending along one or more longitudinal edges of the upper side (12) of the row or rows of cells (10), the one branch or said branches (38) being provided with at least some of said spray orifices (22), said upper ramp (36) forming a ring.

2. Battery according to Claim 1, wherein the space (11) between the cells (10) of the same row ranges between 1 and 10 mm.

3. Battery according to either one of the preceding claims, comprising a condensation plate (26) located facing the upper face (10a) of the cells (10), with a distance separating said condensation plate (26) from the cells (10) ranging between 5 and 10 mm.

4. Battery according to Claim 1, wherein the upper ramp (36) comprises one or more transverse branches (40) extending along one or more transverse edges of said upper side (12) of the row or rows of cells (10), the one lateral branch or said lateral branches (40) being provided with at least some of said spray orifices (22), the upper ramp (36) comprising a connection branch (42) connecting said transverse branches (42), called spray branches.

5. Battery according to any one of Claims 1 to 3, wherein said circuit (20) comprises at least one spray plate (62), provided with the spray orifice or said spray orifices (22), said plate being located opposite one of said lateral sides (14) of the row or rows of cells (10).
